# EUROPEAN PATENT APPLICATION

(11) **EP 4 670 821 A1**
(43) Date of publication of application: **31.12.2025**
(21) Application number: 24382693.0
(22) Date of filing: 27.06.2024
(51) Int. Cl.: B01D 53/22, B01J 19/24, B01D 63/06, B01D 71/02

(54) **MEMBRANE REACTOR ASSEMBLY**

(71) Applicant: Hydrogen Onsite, S.L, 48180 Loiu, Bizkaia (ES)
(72) Inventor: ABAD GALDÓS, Alberto, E-48180 Loiu, Bizkaia (ES); MEDRANO JIMENEZ, José Antonio, E-48180 Loiu, Bizkaia (ES)
(74) Representative: ABG Intellectual Property Law, S.L.

(57) **Abstract**

The present invention relates to a membrane reactor assembly which comprises a plate comprising at least one hole and at least one tube received in said hole and configured to be connected to a membrane of the reactor, wherein the tube is removably attached to the plate.

## Description

### TECHNICAL FIELD OF THE DISCLOSURE

The present disclosure belongs to the field of hydrogen reactors or separators, and more specifically, to the field of membrane reactor assemblies.

### BACKGROUND OF THE DISCLOSURE

One of the most important applications of hydrogen is its use as an energy storage, which is a key point for its introduction in the market and one of its main values and advantages as an energy carrier.

However, despite being one of the most abundant elements on earth, hydrogen is not easy to obtain, as it is not easily found in nature in isolation, but is generated from other substances that contain it, including water, coal and natural gas.

For this reason, membrane reactors or separators comprise hydrogen selective membranes installed in the reactor to obtain clean hydrogen.

In the case of membrane reactors, initial molecules comprising hydrogen (e.g. NH₃, CH₄, methanol, biogas, H₂O...) are introduced in the reactor, which comprises a catalyst that leads to a chemical reaction that causes these initial molecules to split so that hydrogen molecules (H₂) are separated from the other atoms that constitute said initial molecules.

In the case of membrane separators, a gas flow comprising hydrogen molecules among other gases (e.g. natural gas), or a hydrogen flow comprising impurities, is introduced into the separator. Unlike the membrane reactor, no chemical reaction takes place in the separator, since the hydrogen molecules do not combine with the other gases or impurities of the flow, but rather the gases or impurities of the flow only travel with them, e.g. hydrogen travels together with natural gas, but hydrogen and natural gas do not react with each other to form new molecules.

When the flow comprising hydrogen molecules that is inside the reactor/separator approaches the hydrogen-selective membranes installed therein, only hydrogen molecules can pass through the membranes, due to their high selectivity for hydrogen. These hydrogen molecules passing through the membranes constitute the permeate (composed by more than 90% of H₂, preferably more than 97%, and preferably, more than 99% of H₂, for example at least 99,97% of H₂), which exits the reactor/separator through a first output. The components that do not pass through the membranes constitute the retentate, which exits the reactor/separator through a second output.

Generally, each membrane is integrated into the reactor and separator by connecting it to a respective hollow tube leading from a plate. The plate is configured to be installed in the reactor or separator and comprises a plurality of holes to receive each tube.

Typically, the known ways of attaching the tube to the plate are as follows:
- Tube-plate weld: the tube is received in one of the holes of the plate and welded to the plate,
- Expanded with grooves: each hole has one or more grooves. The tube is deformed into these grooves using a mandrel in order to fix the tube to the plate., or
- Hydraulic expansion: The plate holes are cylindrical, without grooves, and the tube is fixed applying internal pressure in order to deform the tube into the hole.

Nevertheless, these three known ways of fixing the tubes to the plate of a reactor or separator, do not allow each membrane of the reactor to be easily and individually disassembled from the reactor, for example when the membrane is damaged and must be replaced for a new one. In particular, when a membrane is to be disassembled and replaced by a new one, the surrounding membranes must be first detached from their respective tubes in order to gain access to this membrane to be uninstalled. This is time-consuming and increases the risk of damaging other membranes. Furthermore, in other cases, such as disassembling the tubes for membrane replacement, the plate would be damaged due to the type of attachment of the tube to the plate.

In view of the above, it is the object of the disclosure to provide a membrane reactor assembly that allows easy replacement of the membranes and does not damage any elements of the reactor.

### SUMMARY OF THE DISCLOSURE

The present disclosure provides an alternative solution for the aforementioned problems, by a membrane reactor assembly according to claim 1, a method of installation of a tube in a membrane reactor assembly according to claim 14 and a method of replacement of a tube in a membrane reactor assembly according to claim 15. In dependent claims, preferred embodiments disclosure are defined.

In a first inventive aspect, it is proposed a membrane reactor assembly comprising:
- a plate comprising at least one hole,
- at least one tube received in said hole and configured to be connected to a membrane of the reactor,
wherein the tube is removably attached to the plate.

In the context of the present disclosure, the term "removably" in connection with the tube, it will be understood as a tube that can be disengaged from the plate without disengaged other tubes or without causing deformation to the plate and ensuring that a new tube can be attached to the plate, all without the need to use a machining process.

In the context of the present disclosure, the term "attached" in connection with the tube refers to the action of installing the tube in the reactor plate by means of attaching such tube to the plate.

In the context of the present disclosure, when an embodiment is described or reference is made to a reactor, it is to be understood that it also applies to separators.

Unless specifically stated otherwise, or unless they are clearly incompatible, all the embodiments disclosed in relation to an aspect of the disclosure are also applicable to the other aspects. It should be understood that the scope of the present disclosure includes all the possible combinations of embodiments disclosed herein, either belonging to the same aspect or to different aspects of the disclosure.

Advantageously, the membrane reactor assembly of the first inventive aspect, according to the embodiments presented, provides a novel membrane reactor assembly in which the removable connection of the tube allows the tube and/or membrane to be installed and replaced easily and individually, and without damaging other membranes and elements of the reactor.

Thus, in comparison with the mentioned known solutions, wherein in order to replace a membrane it is necessary to uninstall the membranes around it, in the membrane reactor assembly of the first inventive aspect it is not necessary to uninstall the membranes around it, but simply detach only the corresponding tube, remove the tube-membrane set, and then install a new tube-membrane set.

Further, the membrane reactor assembly allows to adapt the height at which the membranes are placed inside the reactor. In this way, the membranes can be placed at the required height inside the reactor to achieve maximum hydrogen separation. For example, if it is desired that all membranes are at the same height, possible differences in the length of each membrane can be solved thanks to the length of the tubes, e.g. a tube being longer for a shorter membrane.

In a particular embodiment the tube comprises,
a first part protruding from a first face of the plate and
a second part protruding from a second face of the plate longitudinally opposite to the first face of the plate,
said first part of the tube comprising an end configured to be connected to the membrane of the reactor.

Advantageously, this embodiment allows an easy installation and replacement of the membrane to the tube, and consequently contributing also to an easy installation and replacement of the tube-membrane set to the plate of the reactor. Thanks to the second part of the tube protruding from the second face of the plate, an individual identification of whether one of the hydrogen-selective membranes is leaking in a way that is detrimental to the purity of H₂ production is possible. In particular, thanks to this arrangement, it is possible to easily identify which specific membrane is leaking, and so, should be replaced. To that end, a device such as a flowmeter can be connected to the second part of the tube. In other words, thanks to this arrangement, the quality of each membrane in the reactor can be measured individually in a simple way.

In addition, thanks to the second part of the tube that protrudes from the second face of the plate, when a damaged/leaking membrane is identified, it can be taken out of service by simply installing a cap at the end of this second part of the tube. This can be useful when it is not convenient to replace a membrane (for example, for reasons of time or because the loss of performance caused by taking such a membrane out of service is negligible).

In a particular embodiment, the length of the second part of the tube protruding from a second face of the plate is comprised between 1 cm and 30 cm, preferably between 2 cm and 10 cm and more preferably between 3 cm and 8 cm.

Advantageously, such a length ensures that it is possible to connect to the second part of the tube a device to identify leaking membranes, such a flowmeter, or a cap in order to take out of service a given membrane, as explained above.

In a particular embodiment, the membrane reactor assembly further comprises a membrane connected to the tube, wherein the membrane is a hydrogen-selective membrane.

As mentioned above, membranes are selective barriers that allow the absorption of the desired component, in this embodiment hydrogen.

Advantageously, the membranes are attached to a respective tube extending from a plate to which the tube is detachably attached, as explained above. This allows the reactor assembly to be versatile and durable, as it facilitates the repair of those elements that may be damaged without damaging or deforming the rest of the elements to which they may be attached.

In a particular embodiment, the tube is removably attached to the plate by a connector mechanism comprising:
- a connector body comprising a first end portion and a second end portion, the connector body being crossed by a longitudinal cavity wherein said tube is received,
- a fixing element shaped to be attached to said first end portion,
- gripping means configured to grip the tube when the fixing element is attached to said first end portion.

On one hand, the first and second portions also comprise an outer and inner surface respectively, the inner surface being the surface that surrounds and conforms the cavity, and the outer surface being the one that must be configured to interact with other elements such as the means of attaching, namely the fixing element.

On the other hand, the gripping means are those means configured to hold the tube inside the connector cavity. Furthermore, the grip may be made in such a way that neither the tube nor the reactor plate is damaged once the tube is installed in the reactor.

Advantageously, the connector body along with the fixing element and the gripping means provide a reliable and durable detachable connection of the tube to the plate, as well as an easy installation of a tube in the reactor plate.

In a specific embodiment, the second end portion of the connector body is at least partly installed in the hole of the plate.

Installed, at least in part, means that the second end portion of the connector body could be partially or fully inserted into the reactor plate.

Once the connector is installed on the reactor plate by inserting the second end portion of the connector body into a hole of the plate, it advantageously allows the tube inserted into the connector cavity to be removably attached to the plate.

In a particular embodiment
the external face of said first end portion comprises a first thread complementary of a thread of an internal face of the fixing element, and
an external face of the second end portion comprises a second thread complementary of a thread of an internal face of the hole of the plate, the first thread being different from the second thread.

The differences of the first and second threads may be some of the screw thread parameters, such us for example the pitch or the helix angle of the thread.

The advantage of this embodiment is that as the threads change from one portion to another. Thus if an incorrect installation of the connector body is attempted, i.e. if it is attempted to install the first end portion in the hole of the plate, leaving the second end portion accessible to the fixing element, the connection will not be possible. This is due to the fact that the first thread on the internal face of the fixing element is complementary to the external face of said first end portion of the connector body but different to the second thread of the hole of the plate and to the second end portion of the connector body, so that it will not be possible the connection of the second end portion of the connector body with the fixing element. Therefore, the correct position of the connector can be identified and corrected quickly.

In a preferred example, the fixing element is a nut. The nut comprises a first thread complementary of a thread of the external face of first end portion of the connector body.

In a particular embodiment the connector body further comprises a flange disposed between the first end portion and the second end portion, the flange radially protruding with respect to said second end portion.

The flange is a protrusion from the connector body that is intended to be the boundary of the first and second end portions of the connector body.

In addition, in a further embodiment the flange optionally comprises an external configuration equal to the external configuration of the fixing element, having the advantage of being able to use the same tool to position the connector body on the reactor plate and the fixing element on the second end portion.

In other particular embodiment the flange longitudinally faces the first or the second face of the plate.

This means that advantageously the connecting mechanism can be positioned on either side of the reactor plate to removably attach the tube to the reactor plate.

In a specific embodiment, the flange is welded to the plate.

In same occasions, to fix the connector mechanism to the reactor plate the flange is welded to the face of the plate in order to block the movement of the connecting mechanism. Welding the flange to the plate increases the impermeability of the membrane reactor assembly, so that the H₂ obtained has a higher degree of purity.

In a particular embodiment, the first end portion of the connector body comprises an internal face comprising a beveled end.

The fact that the first portion comprises such a beveled configuration favors the entry of the tube through the connector mechanism to be fixed in the hole of the plate by the gripping means. In addition, the beveled end contributes to the gripping of the tube by the gripping means as it will be detailed later.

In other embodiment the gripping means include a first ring at least partly received in said beveled end of the first end portion of the connector body, wherein the first ring is configured to move radially against the tube by interaction with the beveled end of the first end portion when the fixing element is attached to said first end portion.

The first ring is inserted into the first end portion of the connector body, specifically into the beveled end. When the fixing element is attached to the first end portion of the connector body, the first ring progressively advances in the longitudinal direction, sliding over the beveled end. This interaction between the first ring and the beveled end causes a progressive compression of the first ring against the tube, so that the tube is held in its longitudinal position by the first ring. Thus, the gripping means are responsible for gripping the tube inside the connector mechanism when it is removably connected to the reactor plate. Specifically, the gripping of the tube is achieved by the pressure exerted by the first ring against the tube, at the same time as the beveled end portion that receives the first ring exerts pressure on the first ring as it moves longitudinally when the tube is inserted into the cavity.

In a particular embodiment, the gripping means further include a second ring shaped to be at least partly housed in said first ring, the second ring being configured to longitudinally displace said first ring when the fixing element is attached to said first end portion.

In this particular embodiment, two rings are used to promote a greater tightening of the tube.

In an example, the first ring could be longitudinally longer or have the same longitudinal dimension as the second ring depending on the clamping surface required.

The gripping means may be truncated-cone shaped, wherein the first ring comprises a chamfered end where the second ring is partially received and wherein the chamfered end forms an angle with a longitudinal axis of the connector body.

This angle, or range of angles, is selected in such a manner that during the whole movement of the fixing means, which causes the displacement of the first ring, it is ensured that at least a part of the first ring is in contact with the inner face of the second ring so that the contact between the two is not lost and the longitudinal movement of the first ring allows the displacement of the second ring at all times.

This configuration of the rings allows for better engagement of the rings in the connector body and promote the tightening of the elements against the tube as the elements advance through the cavity.

In a particular embodiment the membrane reactor assembly comprises:
- a plate comprising at least one hole,
- at least one tube received in said hole and connected to a membrane of the reactor,
wherein the tube is removably attached to the plate.

All of the above embodiments are applicable to the membrane reactor assembly with the membrane connected to the tube.

In a second inventive aspect, it is proposed a method of installation of a tube in a membrane reactor assembly according to any one of the embodiments of the fist inventive aspect, wherein the method comprises:
a) providing the plate comprising at least one hole,
b) receiving a tube in said at least one hole, and
c) removably attaching the tube to the plate.

Advantageously, the method of installation of a tube in a membrane reactor assembly of the second inventive aspect, provides a novel method in which the removable connection of the tube to the plate allows the tube and/or membrane to be installed easily and without damaging other membranes and elements of the reactor.

Thus, when a tube is to be removably installed in reactor membrane assembly, first a plate comprising at least one hole is provided, the at least one hole of the plate being intended to receive a tube to which a membrane is attached.

Secondly, the tube is received in said at least one hole of the plate, and finally, the tube is removably attached to the plate.

Additionally, the removable attachment of the tube and the plate is made by means of the connector mechanism mentioned in any of the embodiments of the first inventive aspect. Specifically, the second end portion of the connector body is inserted into the at least one hole of the plate, the tube is then inserted in the cavity of the connector body and the first ring of the gripping means is located resting on the beveled end of the connector body. If the second ring is provided, it may be located resting on the first ring. Finally the fixing element is attached on the external surface of the first end portion of the connector body and tightened until the gripping means compress the tube into the desired position.

In an embodiment, the method comprises, before step b), detaching an installed tube from said at least one hole of the plate and in step b) receiving a tube in the empty hole after detaching the installed tube.

In a third inventive aspect, it is proposed a method of replacement a tube of a membrane reactor assembly according to any one of the embodiments of the first inventive aspect, wherein the method comprises:
a) providing a plate comprising at least one installed tube in said at least one hole of the plate,
b) detaching an installed tube from said at least one hole of the plate,
c) receiving a tube in said at least one hole, and
d) removably attaching the tube to the plate.

Advantageously, the method of replacement of a tube in a membrane reactor assembly of the third inventive aspect, provides a novel method in which the removable connection of the tube to the plate allows the tube and/or membrane to be replaced easily and without damaging other membranes and elements of the reactor.

Thus, when a tube is to be removably replaced in reactor membrane assembly, first a plate comprising at least one installed tube in said at least one hole is provided.

Secondly, the installed tube is detached from said at least one hole of the plate, then a new tube is received in said at least one hole of the plate (namely in the cavity of the connector body), and finally, such new tube is removably attached to the plate.

Additionally, once the installed tube is detached, the removable attachment of the new tube is performed in the same manner as the removable attachment of the tube of the third inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other features and advantages of the disclosure will become clearly understood in view of the following detailed description of embodiments, given just as an example and not being limited thereto, with reference to the appended drawings.
- Figure 1a: This figure shows a schematic representation of a reactor assembly according to the present disclosure configured to be connected to a bundle of membranes.
- Figure 1b: This figure shows the reactor disclosure of figure 1a comprising a membrane reactor.
- Figures 2a-2b: These figures show detailed views of a cross section of the plate of the membrane reactor assembly of figures 1a and 1b.
- Figure 2c: This figure shows a perspective detailed view of the tubes attached to the plate of the membrane reactor assembly of disclosure figures 1a and 1b.
- Figure 3: This figure shows an exploded view of a connector mechanism for the membrane reactor assembly of figures 1a and 1b.
- Figure 4: This figure shows the connector mechanism of figure 3 with details of the interior showing first and second gripping means.

### DETAILED DESCRIPTION OF THE DISCLOSURE

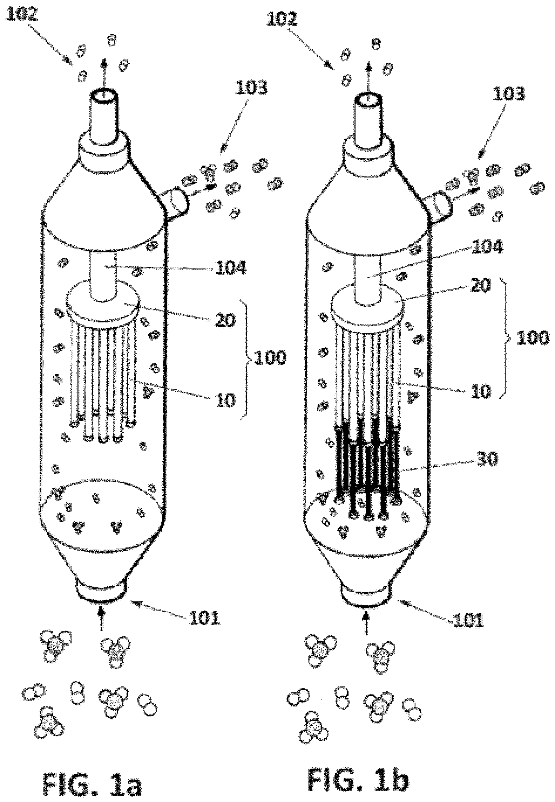

Figure 1b shows a schematic representation of a reactor comprising an input (101) for the initial molecules comprising hydrogen, a first output (102) for the hydrogen molecules (permeate) that have passed through a membrane (30), a membrane reactor assembly (100), and a second output (103) for the components that have not passed through the membrane (retentate). Figure 1a shows the same schematic representation of the reactor without membranes.

In turn, the membrane reactor assembly (100) comprises a plate (20) with at least one hole (20c) to insert a tube (10) to which a selective membrane, for example a hydrogen selective membrane, has been attached. Further, the membrane reactor assembly (100) is in fluid communication with the first output (102) for the output of hydrogen captured by the membranes (30).

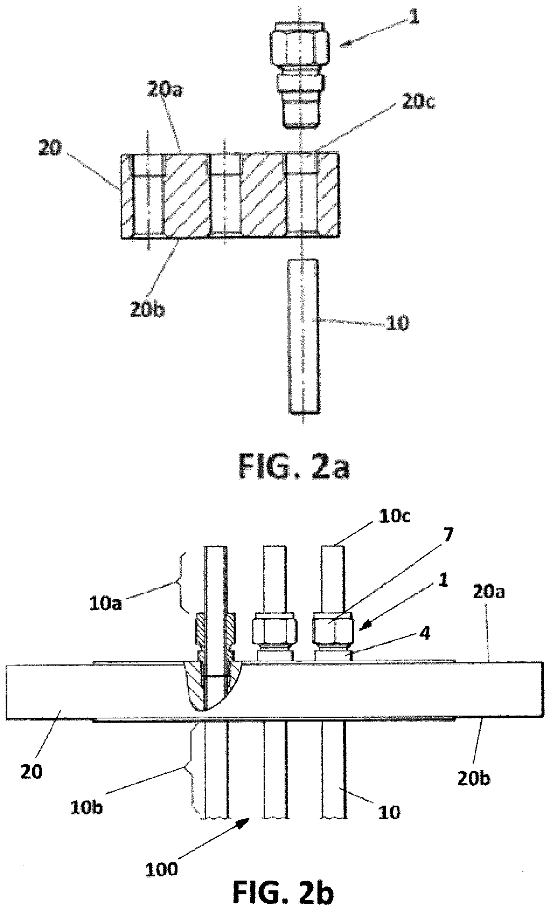

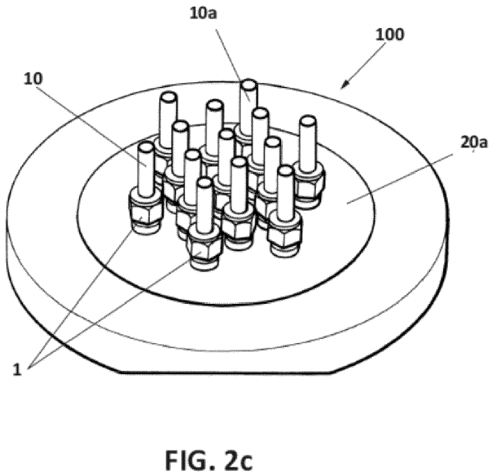

The attachment of the tube (10) to the plate (20) is carried out by means of a removable connection that facilitates the installation and replacement of a tube (10) and/or membrane (30). Once the tube (10) is installed in the at least one hole (20c) of the plate (20) the tube (10) comprises a second part (10a) protruding from a first face (20a) of the plate (20) and a first part (10b) protruding from a second face (20b) of the plate (20) longitudinally opposite to the first face (20a) of the plate (20), said first part (10b) of the tube (10) comprising an end (10c) configured to be connected to the membrane (30) of the reactor as can be observed in more detail in Figure 2b and 2c.

In Figures 2a-2c it can also be observed that the removable attachment of the tube (10) in a correct position on the plate (20) is made by a connector mechanism (1). Preferably, the correct position of the tube is the one that allows a length of the second part (10a) of the tube (10) between 1 cm and 15 cm.

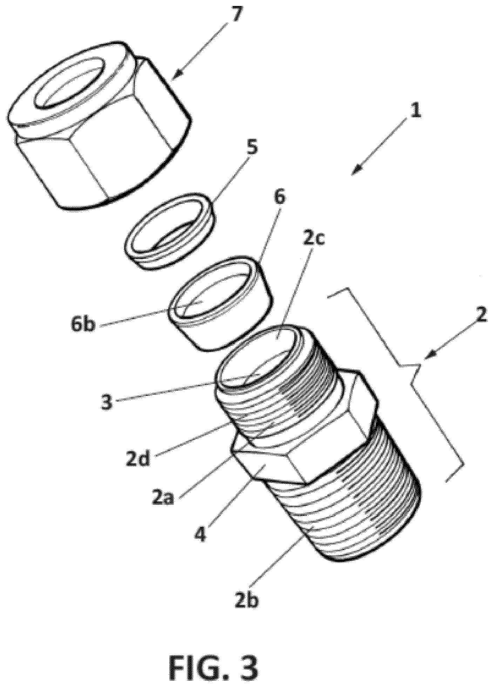

Figure 3 shows a connector mechanism (1) that facilitates or assists in the removable attachment of the tube (10) and the plate (20). Specifically, the connector mechanism (1) comprises a connector body (2), a fixing element (7) shaped to be attached to a first end portion (2a) of the connector body (2), and gripping means (5, 6).

The connector body (2) comprises a first end portion (2a) and a second end portion (2b) and it is crossed by a longitudinal cavity (3) wherein the tube (10) is to be received. Moreover, as Figure 3 shows, the first end portion (2a) comprises an internal face comprising a beveled end (2c) and the second end portion (2b) partly installed in the hole (20c) of the plate (20) as can be seen in Figure 2b.

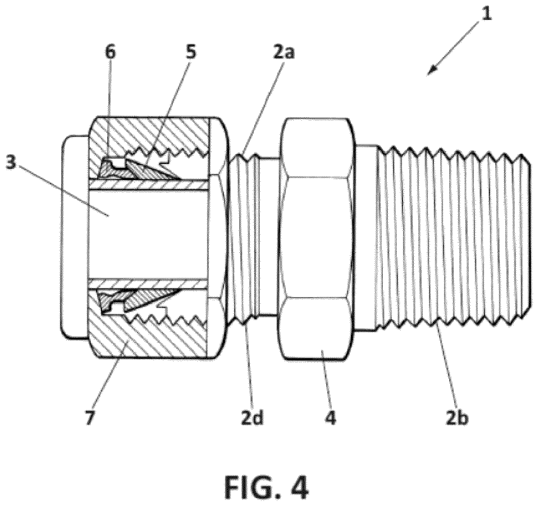

In the particular embodiment shown in figures 3 and 4, on one hand, the external face (2d) of the first end portion (2a) comprises a first thread complementary of a thread of an internal face of the fixing element (7). On the other hand, an external face of the second end portion (2b) comprises a second thread complementary of a thread of and internal face of the hole (20c) of the plate (20).

In these embodiments the connector body (2) further comprises a flange (4) disposed between the first end portion (2a) and the second end portion (2b) that radially protrudes with respect to said second end portion (2b). The flange (4) allows to butt against a surface of the plate (20) when placed the connector body (2) in the at least one hole (20c) of the plate (20) of the membrane reactor assembly (100) as seen in Figure 2b and 2c.

The gripping means (5, 6) depicted in Figures 3 and 4 are configured to grip the tube (10) when the fixing element (7) is attached to the first end portion (2a).

The gripping means (5, 6) include a first ring (6) and a second ring (5). Specifically, in figure 4 can be observe in more detail that the first ring (6) is at least partly received in the beveled end (2c) of the first end portion (2a) of the connector body (2) and the second ring (5) is shaped to be partly housed in the first ring (6).

When the connector mechanism (1) is coupled in the membrane reactor assembly (100) as show in figure 4, the second ring (5) is configured to longitudinally displace the first ring (6) when the fixing element (7) is attached to said first end portion (2a). Therefore, given that, the first ring (6) is configured to move radially against the tube (10) by interaction with the beveled end (2c) of the first end portion (2a), said configuration achieve tightening the rings against the tube (10) and fixing the tube (10) in its correct position.

In the embodiment shown in Figures 3 and 4, the gripping means (5, 6) are truncated-cone shaped, and the first ring (6) comprises a chamfered end (6b) where the second ring (5) is partially received. So, when the fixing element (7) is progressively tightened on the end portion (2a) of the connector body (2), wherein one end of the second ring (5) butts against an inner wall of the fixing element (7), causes a progressive longitudinal movement of the first and second rings (6, 5), thus compressing the first ring (6) against the tube (10) inserted in the longitudinal cavity (3), which induces a solidary longitudinal movement of the second ring (5) which is compressed against the first ring (6) which in turn is compressed against the tube (10).

### Installation of the membrane reactor assembly

Following the above, the method of installation of the membrane reactor assembly starts providing a plate (20) comprising at least one hole (20c) as observed in Figure 2a-2c. Then the tube (10) is inserted through said at least one hole (20c) in a removably attach.

In a particular embodiment, in order to removably attach the tube (10) to the plate (20) it is necessary to removably install a connector mechanism (1) in the plate (20) before inserting the tube. For this purpose, a second end portion (2b) of a connector body (2) is inserted in a respective hole (20c) of the plate (20).

In a preferred embodiment, the attachment of the second end portion (2b) of a connector body (2) in the hole (20c) of the plate is done by a complementary thread.

Once the second end portion (2b) of the connector body (2) is inserted into the hole (20c) of the plate (20), the flange (4) of the connector body (2) is directly in contact with the first face (20a) of the plate (20) as can be observed in Figures 2b and 2c. Further, in that position, two parts of the tube (10) protrude from opposite faces (20a, 20b) of the plate (20). In an example, the second part (10a) of the tube (10) that protrudes over the first surface (20a) of the plate (20) can measure between 1 cm and 15 cm, or between 2 cm and 10 cm, or between 3 cm and 8 cm.

After that, the tube (10) is inserted in a cavity (3) of the connector body (2), wherein the connector body (2) comprises a gripping means (5, 6) (see figure 3) in a first end portion (2a) of the connector body (2). Therefore, while the tube (10) is introduced into this cavity (3), the second ring (5) of the gripping means may rest on the first end portion (2a), specifically in a beveled end (2c) of the first end portion (2a) and the first ring (6) of the gripping means may rest on the second ring (5), so that the tube (10) also passes through both rings (5, 6) during this movement.

In a particular embodiment, the rings (5, 6) can be installed around the tube (10) after it has been introduced in the cavity (3) of the connector body (2).

Hereafter, a fixing element (7), for example a nut, is tightened in the first end portion (2a) of the connector body (2), so that gripping of the tube (10) is ensured by both rings of gripping means (5, 6), as explained above.

### Replacement of the tube and/or membrane of the membrane reactor assembly

When a membrane or tube (10) must be replaced because it is damaged or broken, the present disclosure membrane reactor assembly allows an easy replacement of the membrane or tube (10).

In this situation, the reactor with membrane reactor assembly comprises a membrane attached in a portion (10c) of the installed tube (10) that must be replaced (see for example figure 1b).

Therefore, firstly, the fixing element (7) of the first end portion (2a) of the connector body (2) that holds the tube (10) corresponding to the membrane to be replaced must be simply loosened.

After this, the tube (10) is moved substantially in the longitudinal direction to the face (20a) of the plate (20) on which the flange (4) of the connector body (2) rests because the pressure of the rings (5, 6) is reduced.

The tube (10) is then cut below the position where both rings (5, 6) hold the tube (10), since the rings (5, 6) cannot be removed through the second portion (2a), as they have a larger diameter than the diameter of the cavity (3) of the connector body (2).

After the tube (10) has been cut, the part of the tube (10a) below the rings (5, 6) (see figure 2b) can be easily removed in the direction to the surface (20a) of the plate (20) and the rest of the tube (10b) can be removed through the surface (20b) of the plate (20). Finally, a new tube (10) can be installed in the now empty hole (20c) of the plate (20) as explained above.

## Claims

1. Membrane reactor assembly (100) comprising:
- a plate (20) comprising at least one hole (20c),
- at least one tube (10) received in said hole (20c) and configured to be connected to a membrane of the reactor,
wherein the tube (10) is removably attached to the plate (20).

2. Membrane reactor assembly (100) according to claim 1, wherein the tube (10) comprises,
a first part (10b) protruding from a first face (20b) of the plate (20) and
a second part (10a) protruding from a second face (20a) of the plate (20) longitudinally opposite to the first face of the plate (20),
said first part (10b) of the tube (10) comprising an end configured to be connected to the membrane of the reactor.

3. Membrane reactor assembly (100) according to any of the preceding claims, wherein a length of the second part (10a) of the tube (10) is comprised between 1 cm and 30 cm, preferably between 2 cm and 10 cm or between 3 cm and 8 cm.

4. Membrane reactor assembly (100) according to any one of claims 1 to 3, wherein the tube (10) is removably attached to the plate (20) by a connector mechanism (1) comprising:
- a connector body (2) comprising a first end portion (2a) and a second end portion (2b), the connector body (2) being crossed by a longitudinal cavity (3) wherein said tube (10) is received,
- a fixing element (7) shaped to be attached to said first end portion (2a),
- gripping means (5, 6) configured to grip the tube (10) when the fixing element (7) is attached to said first end portion (2a).

5. Membrane reactor assembly (100) according to claim 4, wherein the second end portion (2b) of the connector body (2) is at least partly installed in the hole (20c) of the plate (20).

6. Membrane reactor assembly (100) according to claim 5, wherein
an external face (2d) of said first end portion (2a) comprises a first thread complementary of a thread of an internal face of the fixing element (7), and
an external face of the second end portion (2b) comprises a second thread complementary of a thread of and internal face of the hole (20c) of the plate (20), the first thread being different from the second thread.

7. Membrane reactor assembly (100) according to any one of claims 4 to 6, wherein the connector body (2) further comprises a flange (4) disposed between the first end portion (2a) and the second end portion (2b), the flange (4) radially protruding with respect to said second end portion (2b).

8. Membrane reactor assembly (100) according to claim 7 and any one of claims 2 or 3, wherein the flange (4) longitudinally faces the first or the second face of the plate (20).

9. Membrane reactor assembly (100) according to any one of claims 7 or 8, wherein the flange (4) is welded to the plate (20).

10. Membrane reactor assembly (100) according to any one of claims 4 to 9, wherein the first end portion (2a) of the connector body (2) comprises an internal face comprising a beveled end (2c).

11. Membrane reactor assembly (100) according to claim 10, wherein the gripping means (5, 6) include a first ring (6) at least partly received in said beveled end (2c) of the first end portion (2a) of the connector body (2), wherein the first ring (6) is configured to move radially against the tube (10) by interaction with the beveled end (2c) of the first end portion (2a) when the fixing element (7) is attached to said first end portion (2a).

12. Membrane reactor assembly (100) according to claim 11, wherein the gripping means (5, 6) further include a second ring (5) shaped to be at least partly housed in said first ring (6), the second ring (5) being configured to longitudinally displace said first ring (6) when the fixing element (7) is attached to said first end portion (2a).

13. Membrane reactor assembly (100) according to any one of the preceding claims, further comprising a membrane connected to the tube (10), wherein the membrane is a hydrogen-selective membrane.

14. Method of installation of a tube (10) in a membrane reactor assembly (100) according to any one of claims 1 to 13, wherein the method comprises:
a) providing the plate (20) comprising at least one hole (20c),
b) receiving a tube (10) in said at least one hole (20c), and
c) removably attaching the tube to the plate (20).

15. Method of replacement a tube (11) of a membrane reactor assembly (100) according to any one of claims 1 to 13, wherein the method comprises:
a) providing a plate (20) comprising at least one installed tube (11) in said at least one hole (20c) of the plate (20),
b) detaching an installed tube (11) from said at least one hole of the plate (20),
c) receiving a tube (10) in said at least one hole (20c), and
d) removably attaching the tube (10) to the plate (20).
